# EUROPÄISCHE PATENTSCHRIFT

(11) **EP 3 249 286 B1**
(45) Veröffentlichungstag und Bekanntmachung des Hinweises auf die Patenterteilung: **21.11.2018**
(21) Anmeldenummer: 16170816.9
(22) Anmeldetag: 23.05.2016
(51) Int. Cl.: F21S 8/08, F21W 131/103, H02J 7/00, F21S 9/03, F21S 9/02

(54) **ANLAGE ZUR BELEUCHTUNG EINER UMGEBUNG**
INSTALLATION FOR ILLUMINATING AN ENVIRONMENT
INSTALLATION D'ECLAIRAGE D'UN ENVIRONNEMENT

(43) Veröffentlichungstag der Anmeldung: 29.11.2017
(73) Patentinhaber: ICGH Investment and Consulting GmbH, 1150 Wien (AT)
(72) Erfinder: Hornbachner, Dieter, 1170 Wien (AT)
(74) Vertreter: Weiser, Andreas

(56) Entgegenhaltungen:
- EP-A2- 1 633 029
- CN-A- 104 791 696
- CN-Y- 2 717 093
- DE-A1-102009 006 982
- US-A- 4 200 904
- US-A1- 2013 134 938

## Beschreibung

Die vorliegende Erfindung betrifft eine Anlage zur Beleuchtung einer Umgebung, mit einer Mehrzahl von Leuchtvorrichtungen, die in der Umgebung verteilt und über ein Wegenetz anfahrbar sind, wobei jede Leuchtvorrichtung eine Leuchte, ein Wind- und/oder Solarmodul zur Erzeugung von die Leuchte speisendem Wind- bzw. Solarstrom, eine Pufferbatterie zur Zwischenspeicherung des Wind- bzw. Solarstroms und einen Ladeeingang zum Laden der Pufferbatterie aufweist.

Bei der Ersterrichtung einer Beleuchtungsanlage für einen Stadtteil, ein Dorf, einen Park usw. mit herkömmlichen Straßenleuchten werden etwa zwei Drittel der Investitionskosten alleine für die Installation der Verkabelung der einzelnen Straßenleuchten aufgewendet. Es ist daher von großem Vorteil, anstelle herkömmlicher kabelgebundener Leuchten Wind- oder Solarleuchten zu verwenden, welche an ihren Aufstellungsorten jeweils autark mit Strom aus einem Wind- oder Solarmodul betreibbar sind. Eine Pufferbatterie kann dabei den untertags erzeugten Solarstrom oder bei Wind erzeugten Windstrom für die Verwendung in der Nacht oder bei Windstille bevorraten. Einem breiten Einsatz von Wind- oder Solarleuchtenanlagen stehen jedoch Vorbehalte hinsichtlich einer ausreichenden Energiebilanz entgegen, insbesondere außerhalb des Sonnengürtels, wo der Winterertrag von Solarmodulen gering ist, bzw. in windarmen Regionen. Die CN 104 791 696 A zeigt ein System zur Versorgung von Laternen mittels Solarenergie.

Die Erfindung setzt sich zum Ziel, diese Nachteile zu überwinden und eine Beleuchtungsanlage mit Wind- und/oder Solarleuchten zu schaffen, welche auch in windarmen Gegenden bzw. Gegenden außerhalb des Sonnengürtels zuverlässig einsetzbar ist.

Dieses Ziel wird mit einer Anlage der einleitend genannten Art erreicht, welche sich gemäß der Erfindung dadurch auszeichnet, dass sie ferner umfasst:
eine gemeinsame Ladestation für die Leuchtvorrichtungen, welche über das Wegenetz anfahrbar ist und einen Ladeausgang zur Abgabe von Ladestrom aufweist, und
einen auf dem Wegenetz autark fahrenden Roboter, der einen Akkumulator aufweist und zwischen einer ersten Stellung, in welcher er am Ladeausgang der Ladestation andockt und deren Ladestrom im Akkumulator speichert, und mehreren zweiten Stellungen, in denen er jeweils am Ladeeingang einer Leuchtvorrichtung andockt und deren Pufferbatterie aus dem Akkumulator lädt, pendelt.

Die Beleuchtungsanlage der Erfindung kann tages- oder jahreszeitlich bedingte Mindererträge der Wind- oder Solarmodule der einzelnen Leuchtvorrichtungen kompensieren, indem ein intelligentes Hilfs- und Zuladesystem für die Leuchten geschaffen wird. Ein einziger, autark fahrender Roboter kann gleich eine Vielzahl von Leuchten nachladen, wodurch sich die Installations- und Instandhaltungskosten der zentralen Infrastruktur aus Ladestation und Roboter auf eine Vielzahl von Leuchten aufteilt. Im Ergebnis können dadurch die geringen Erstinstallationskosten einer Wind- oder Solarleuchtenanlagen mit der Zuverlässigkeit herkömmlicher kabelgebundener Leuchtenanlagen vereint werden. Die geringen Infrastrukturkosten der erfindungsgemäßen Beleuchtungsanlage ermöglichen damit auch einen großflächigen Einsatz in Gegenden mit wenig oder nur fallweisem Wind bzw. mit geringer oder stark schwankender Sonneneinstrahlung oder Wind- und Sonnenabschattungsbereichen durch Gebäude oder Vegetation. Auch ein über die Jahre steigender Energiebedarf der Leuchtvorrichtungen, beispielsweise durch nachträgliche Installation zusätzlicher Energieverbraucher am Mast oder durch die Alterung der Leuchten, kann dadurch ausgeglichen werden, ohne die installierten Wind- oder Solarmodule gegen leistungsstärkere austauschen zu müssen. Ein weiterer Vorteil ist, dass die Kapazität der Pufferbatterien deutlich reduziert werden kann, da keine mehrtägige Autonomie der Leuchtvorrichtungen mehr erforderlich ist, wenn der Roboter beispielsweise einmal pro Tag nachlädt. Eine eintägige Energieautonomie reicht damit aus, was zu einer erheblichen Kostenersparnis durch kleinere Pufferbatterien führt.

Der Roboter kann beispielsweise nach einem vorgegebene Fahrmuster bzw. Fahrplan auf dem Wegenetz die einzelnen Leuchtvorrichtungen abfahren und je nach Ladezustand deren Pufferbatterie nachladen. Eine alternative bevorzugte Ausführungsform der Erfindung zeichnet sich dadurch aus, dass jede Leuchtvorrichtung eine mit einem Sender ausgestattete Überwachungsschaltung für den Ladestand der Pufferbatterie aufweist und dafür ausgebildet ist, bei geringem Ladestand ein Anforderungssignal über den Sender auszustrahlen. Ein solches Anforderungssignal kann gemäß einer ersten Variante der Erfindung an den Roboter direkt gerichtet sein. Der Roboter weist in diesem Fall einen Empfänger auf und ist dafür ausgebildet, bei Empfang eines Anforderungssignals die sendende Leuchtvorrichtung anzufahren und aufzuladen. In einer alternativen Variante kann das Anforderungssignal von der Ladestation empfangen werden und diese weist einen Empfänger auf und ist dafür ausgebildet, bei Empfang eines Anforderungssignals den Roboter zu der sendenden Leuchtvorrichtung zu schicken, um diese aufzuladen. In jedem Fall können dadurch die Fahrten das Roboters minimiert und individuell an den Ladebedarf der einzelnen Leuchtvorrichtungen angepasst werden.

Das Anforderungssignal kann entweder selbst die Position der sendenden Leuchtvorrichtung enthalten, so dass der Roboter weiß, wohin er zu fahren hat, oder das Anforderungssignal enthält nur eine Kennung der Leuchtvorrichtung und in der Anlage, z.B. in der Ladestation oder dem Roboter, ist ein Speicher mit Kennungen und zugeordneten Positionen von Leuchtvorrichtungen vorgesehen, in welchem die zu einer empfangenen Kennung zugehörige Leuchtvorrichtungsposition nachgeschlagen werden kann, um den Roboter dorthin zu fahren.

Die Beleuchtungsanlage der Erfindung eignet sich für die Anbringung an allen Arten von Wegenetzen, seien es Land-, Wasser- oder sogar Luftwegenetze. Gemäß einer ersten Ausführungsform der Erfindung, welche sich für die Ausstattung von Stadtteilen, Dörfern, Parks usw. eignet, ist das Wegenetz ein Landwegenetz und der Roboter ein unbemanntes Landfahrzeug.

In einer alternativen Ausführungsform, welche sich für die Ausstattung von Uferpromenaden, Häfen usw. eignet, ist das Wegenetz ein Wasserstraßennetz und der Roboter ein unbemanntes Wasserfahrzeug.

In beiden Varianten weist bevorzugt jede Leuchtvorrichtung einen Mast auf, an dessen unterem Ende der Ladeeingang und an dessen oberem Ende die Leuchte liegt, so dass das Land- oder Wasserfahrzeug den Ladeeingang vom Straßen- oder Wasserrand aus leicht erreichen kann.

In einer weiteren alternativen Variante, welche sich auch für die Ausstattung von unwegsamen Arealen eignet, ist das Wegenetz ein Luftwegenetz und der Roboter ein unbemanntes Luftfahrzeug (unmanned areal vehicle, UAV). Dazu weist bevorzugt jede Leuchtvorrichtung einen Mast auf, an dessen oberem Ende der Ladeeingang liegt, so dass er für den UAV-Roboter gut zugänglich ist.

In jeder dieser Ausführungsformen können die Masten der Leuchtvorrichtungen auch dazu verwendet werden, weitere stromgespeiste Einrichtungen zu tragen, wie optische oder akustische Signaleinrichtungen, Funk-Transceiver oder Funk-Router, um beispielsweise eine kabellose Signal- oder Funk-Infrastruktur für die Umgebung miterrichten zu können.

Die Erfindung wird nachstehend anhand von in den beigeschlossenen Zeichnungen dargestellten Ausführungsbeispielen näher erläutert. In den Zeichnungen zeigen:
Fig. 1 die Anlage der Erfindung installiert in einer beispielhaften Umgebung in einer schematischen Draufsicht; und
die Fig. 2 bis 4 verschiedene Ausführungsformen der Anlage der Erfindung jeweils in schematischen Seitenansichten.

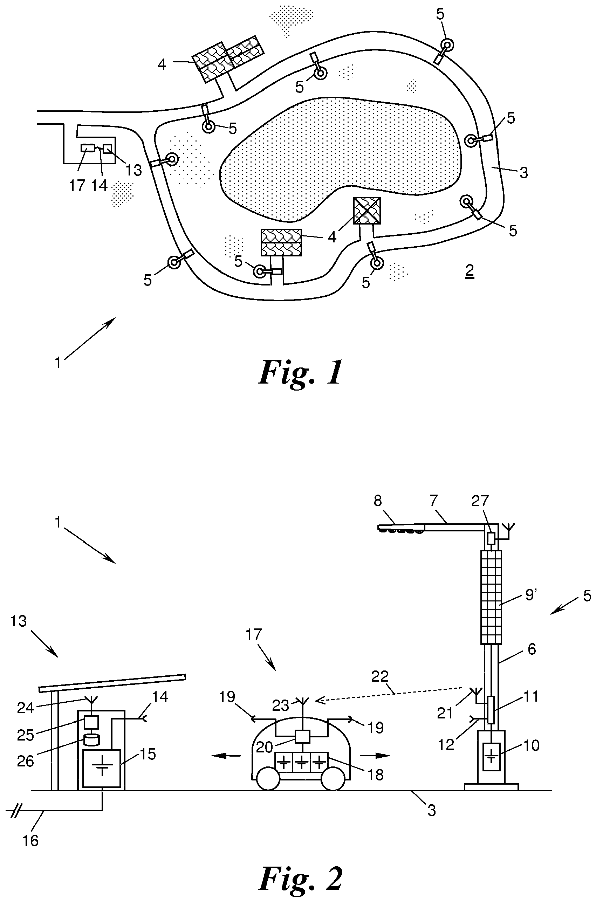

In Fig. 1 ist eine Beleuchtungsanlage 1 zum Beleuchten einer Umgebung 2 gezeigt, hier eines Parks mit einem Wegenetz 3, Gebäuden 4 und einem Teich, wobei die Anlage 1 aus mehreren Komponenten besteht. Die Anlage 1 umfasst als erste Komponente eine Vielzahl von Leuchtvorrichtungen 5, die zur Beleuchtung der Umgebung 2 in dieser verteilt angeordnet sind, z.B. entlang des Wegenetzes 3 zur Beleuchtung des Wegenetzes 3. Eine dieser Leuchtvorrichtungen 5 ist stellvertretend in Fig. 2 im Detail gezeigt.

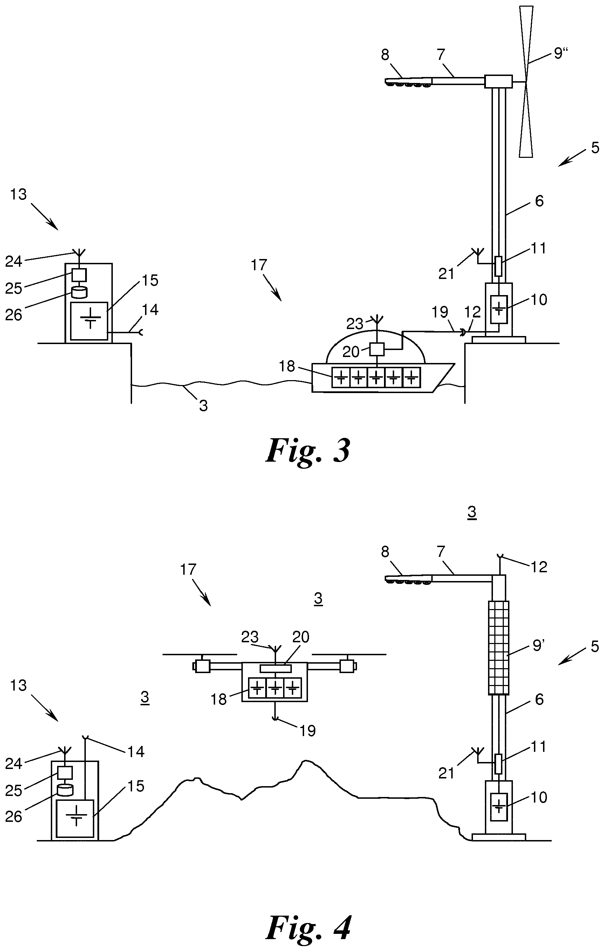

Gemäß Fig. 2 umfasst jede Leuchtvorrichtung ("Wind- oder Solarleuchte") 5 einen Mast 6, der an seinem oberen Ende über einen Arm 7 eine Leuchte 8 trägt und mit einem Solarmodul 9' (Fig. 2, 4) und/oder einem Windmodul 9" (Fig. 3) zur Erzeugung von Solar- und/oder Windstrom ausgestattet ist, welcher die Leuchte 8 speist. Der die Leuchte 8 speisende Wind- bzw. Solarstrom des Wind- bzw. Solarmoduls 9', 9" kann in einer Pufferbatterie 10 der Leuchtvorrichtung 5 zwischengespeichert werden, beispielsweise um den untertags erzeugten Solarstrom für die Nachtstunden oder den bei Wind erzeugten Windstrom für Windstille zu bevorraten. Eine elektronische Schaltung 11 regelt dabei die Aufladung der Pufferbatterie 10 durch das Wind- bzw. Solarmodul 9', 9" sowie die Speisung der Leuchte 8 vom Wind- bzw. Solarmodul 9', 9" und/oder der Pufferbatterie 10 ausgehend. Über einen Ladeeingang 12 am unteren Ende des Mastes 6 kann die Pufferbatterie 10 auch extern geladen werden, wie nachstehend noch ausführlicher erläutert.

Als Solarmodul 9' können jegliche in der Technik bekannte Fotovoltaik-Module verwendet werden, welche einfallendes (Sonnen-)Licht in Strom ("Solarstrom") umwandeln. Die Solarmodule 9' können dabei sowohl seitlich am oder um den Mast 6, z.B. in Hülsenform wie gezeigt, oder auch als flache Paneele am oberen Ende des Mastes 7 oder dessen Arm 7 montiert werden. Wenn die Leuchtvorrichtung 5 alternativ oder zusätzlich zu dem Solarmodul 9' ein Windmodul 9" zur Erzeugung von Windstrom hat, kann dazu jede in der Technik bekannte Art von Windturbine eingesetzt werden, wie in Fig. 3 schematisch veranschaulicht.

Zurückkommend auf Fig. 1 umfasst die Anlage 1 als zweite Komponente eine gemeinsame Ladestation 13 für die gesamte Gruppe von Leuchtvorrichtungen 5 der Umgebung 2. Die Ladestation 13 ist über das Wegenetz 3 mit den Leuchtvorrichtungen 5 verbunden. Wie in Fig. 2 gezeigt, hat die Ladestation 13 einen Ladeausgang 14 zur Abgabe von Ladestrom, welcher von einer Stromquelle 15 der Ladestation 13 gespeist ist. Die Stromquelle 15 kann beliebiger Art sein, beispielsweise eine Batterie, ein verbrennungskraftgetriebener Stromgenerator und/oder ein Anschluss 16 an das öffentliche Stromnetz.

Gemäß den Fig. 1 und 2 umfasst die Anlage 1 als dritte Komponente einen auf dem Wegenetz 3 autark fahrenden Roboter 17, der zwischen der Ladestation 13 und den Leuchtvorrichtungen 5 pendelt, um letztere auf- bzw. nachzuladen. Dazu hat der Roboter 17 einen internen Akkumulator 18 und zumindest eine Ladekupplung 19, mit welcher er in einer ersten Stellung (Fig. 1) am Ladeausgang 14 der Ladestation 13 andockt und deren Ladestrom in seinem Akkumulator 18 speichert. Wenn der Akkumulator 18 aufgeladen ist, verlässt der Roboter 17 die Ladestation 13, dockt mit seinem Ladeanschluss 19 am Ladeeingang 12 einer der Leuchtvorrichtungen 5 an und lädt in dieser zweiten Stellung (Fig. 3) die Pufferbatterie 10 der Leuchtvorrichtung 5 aus seinem Akkumulator 18 auf bzw. nach. Eine elektronische Schaltung 20 des Roboters 17 regelt dabei sowohl das Aufladen des Akkumulators 18 in der Ladestation 13 als auch das Abgeben des Ladestroms aus dem Akkumulator 18 an die Leuchtvorrichtung 5.

Der Ladeanschluss 19 kann beispielsweise auf einem ausschwenk- oder ausfahrbaren Ladearm des Roboters 17 angebracht sein. Damit kann der Roboter 17 auch schwer erreichbare Ladeeingänge 12 von Leuchtvorrichtungen 5 erreichen, die beispielsweise einige Meter abseits des Wegenetzes 3 liegen, oder um z.B. Schneewechten überbrücken zu können. Bei Verwendung eines solchen ausschwenk- oder ausfahrbaren Ladeanschlusses 19 können die Ladeingänge 12 der Leuchtvorrichtungen 5 optional auch höher am Mast 6 situiert werden, um Manipulationen zu erschweren. Die Ladeeingänge 12 können aber auch jeweils getrennt vom Mast 6 installiert und über ein Kabel mit dem Mast 6 verbunden werden, um ihre Erreichbarkeit für den Roboter 17 gegebenenfalls zu verbessern.

Auf dem Wegenetz 13 fährt der Roboter 17 völlig autark, wie es auf dem Gebiet von Mährobotern, Staubsaugrobotern oder selbstfahrenden Autos bekannt ist. Dazu können alle in der Technik bekannten Selbstfahrtechnologien verwendet werden, z.B. eine Selbstverortung und -steuerung mittels Satellitennavigation und eines in der Schaltung 20 gespeicherten digitalen Straßennetzes, in dem die Positionen der Ladestation 13 und der Leuchtvorrichtungen 5 gespeichert sind. Alternativ oder zusätzlich ist die Verwendung von Positionier- oder Stützbaken entlang des Wegenetzes 3 möglich, die beispielsweise mittels Licht- oder Funkleitsignalen den Roboter 17 führen. Auch die Verwendung von im Untergrund verlegten Induktionsschleifen, Leitantennen usw. zur Führung des Roboters 17 zu und von der Ladestation 13 und den Leuchtvorrichtungen 5 ist möglich.

Das Fahrmusters des Roboters 17 wird dabei jeweils entsprechend der Kapazität seines Akkumulators 18 und dem Ladestrombedarf der Leuchtvorrichtungen 5 gewählt. So kann der Roboter 17 beispielsweise nach jedem Aufladen einer Leuchtvorrichtung 5 wieder zur Ladestation 13 zurückkehren, um sich selbst aufzuladen, oder er kann mehrere Ladevorrichtungen 5 nacheinander anfahren und aufladen, bevor er zur Ladestation 13 zurückkehrt, um sich wieder aufzuladen.

Der Roboter 17 kann eine vorgegebene Route auf dem Wegnetz 3 abfahren und jede Leuchtvorrichtung 5, der er auf dem Weg begegnet, aufladen. Alternativ können die Leuchtvorrichtungen 5 jedoch auch individuell ihren Ladebedarf an den Roboter 17 bzw. die Ladestation 13 signalisieren, wie nachstehend erläutert.

Zu diesem Zweck ist optional jede Leuchtvorrichtung 5 mit einem an die Schaltung 11 angeschlossenen Sender 21 ausgestattet und die Schaltung 11 überwacht den Ladestand der Pufferbatterie 10. Wenn der Ladestand unter einen vorgegebenen Schwellwert absinkt, veranlasst die Schaltung 11 die Ausstrahlung eines Anforderungssignals 22 über den Sender 21.

Das Anforderungssignal 22 kann in einer ersten Ausführungsform direkt von einem Empfänger 23 des Roboters 17 empfangen werden und veranlasst diesen - über seine elektronische Schaltung 20 - dazu, die sendende (oder gesendet habende) Leuchtvorrichtung 5 anzufahren und aufzuladen.

In einer alternativen Ausführungsform kann das Anforderungssignal 22 von einem Empfänger 24 der Ladestation 13 empfangen werden und diese ist so programmiert, dass sie den Roboter 17 zu der sendenden (bzw. gesendet habenden) Leuchtvorrichtung 5 schickt, um diese aufzuladen. Beispielsweise kann die Ladestation 13 die Position und den Ladebedarf der Leuchtvorrichtung 5 über Funk oder über den Ladeausgang 14 dem Roboter 17 als nächstes Ziel für seine Ausfahrt zum Laden mitteilen.

Wenn das Anforderungssignal 22 direkt vom Roboter 17 empfangen wird, kann dieser beispielsweise in einer einfachen Variante lediglich den Ausstrahlungsort des Signals anpeilen und findet damit die sendende Leuchtvorrichtung 5, welche Ladebedarf hat. Bevorzugt ist das Anforderungssignal 22 jedoch ein Datenpaket, das eine eindeutige Kennung der Leuchtvorrichtung 5 der Anlage 1 enthält, und in der Anlage 1 ist ein Speicher 26 mit einer Zuordnungstabelle von Kennungen von Leuchtvorrichtungen 5 einerseits und zugeordneten Positionen von Leuchtvorrichtungen 5 andererseits angeordnet, beispielsweise in der Ladestation 13. Bei Empfang des Anforderungssignals 22 in der Ladestation 13 schlägt die Schaltung 25 der Ladestation 13 in dem Speicher 26 die der empfangenen Kennung zugeordnete Position der sendenden Leuchtvorrichtung 5 nach und übermittelt diese Position an den Roboter 17 wie beschrieben. Alternativ kann der Speicher 26 mit der Zuordnungstabelle auch direkt im Roboter 17 angeordnet sein, so dass dieser bei Erhalt des Anforderungssignals 22 aus der Kennung der Leuchtvorrichtung 5 deren Position ermitteln kann, um sie anzufahren.

Alternativ kann das Anforderungssignal 22 auch direkt die Position der Leuchtvorrichtung 5 angeben, so dass der Speicher 26 mit der Zuordnungstabelle entfallen kann.

In den Fig. 1 und 2 ist das Beispiel eines Landwegenetzes als Wegenetz 3 gezeigt, und der Roboter 17 ist ein Landfahrzeug. Fig. 3 zeigt eine alternative Ausführungsform der Anlage 1, wobei das - hier nur schematisch dargestellte - Wegenetz 3 ein Netz von Wasserstraßen und der Roboter 17 in Form eines unbemannten Wasserfahrzeugs ausgebildet ist. Die Leuchtvorrichtungen 5 sind hier am Ufer des Wasserstraßennetzes 3 angeordnet und ihr Ladeeingang 12 liegt am unteren Ende des Mastes 6, so dass er vom Wasserfahrzeug-Roboter 17 mit einer davon auskragenden Ladekupplung 19 leicht erreichbar ist.

Fig. 2 zeigt ferner die optionale Verwendung der Masten 6 der Leuchtvorrichtungen 5 zur Abstützung von weiteren Einrichtungen 27, die mit dem batteriegepufferten Wind- bzw. Solarstrom aus dem Wind- und/oder Solarmodul 9', 9" gespeist werden können, wie optische oder akustische Signaleinrichtungen, Funk-Transceiver oder Funk-Router 27, z.B. einen Wifi-Hotspot, Überwachungskameras, Umweltsensoren, Verkehrszeichen, Verkehrsinformationssysteme, Handy-Ladestationen, beleuchtete Werbeflächen, od. dgl.

In Fig. 4 ist eine weitere Ausführungsform der Anlage 1 dargestellt, bei welcher das Wegenetz 3 ein Netz von Luftwegen bzw. Luftfahrtstraßen und der Roboter 17 als unbemanntes Luftfahrzeug (unmanned areal vehicle, UAV) ausgebildet ist. Diese Ausführungsform eignet sich besonders für die Installation von Leuchtvorrichtungen 5 in einer unwegsamen und auch nicht durch Wasserstraßen aufgeschlossenen Umgebung 2. Die Leuchtvorrichtungen 5 tragen hier ihren Ladeeingang 12 am oberen Ende des Mastes 6, so dass der als UAV ausgebildete Roboter 17 mit seiner Ladekupplung 19 den Ladeeingang 12 von der Luft her erreichen kann. Auch der Ladeausgang 14 der Ladestation 13 ist bevorzugt an deren Oberseite angeordnet, um das einfache Andocken des UAV-Roboters 17 zu ermöglichen.

Der Roboter 17 kann in jeder der genannten Ausführungsformen auch mit mechanischen oder elektronischen Einrichtung zum Öffnen von Türen und Toren ausgestattet sein, um z.B. eingezäunte Bereiche wie Hundezonen, Kinderspielplätze od. dgl. anfahren zu können.

Optional kann sich der Roboter 17 beim Andocken an einer Leuchtvorrichtung 5 auch selbst aufladen, wenn die Leuchtvorrichtung 5 einen Energieüberschuss in ihrer Pufferbatterie 10 hat. Die Schaltung 11 der Leuchtvorrichtung 5 kann dazu mit der Schaltung 20 des Roboters 17 entsprechend kommunizieren, beispielsweise über den Sender 21 und Empfänger 23 oder über ein kabelgebundene Datenverbindung beim Andocken des Roboters 17 an der Leuchtvorrichtung 5, um das Aufladen der Pufferbatterie 10 oder aber das Abgeben eines allfälligen Energieüberschusses an den Akkumulator 18 zu regeln. Die Schaltungen 11, 20, 25 von Ladestation 13, Roboter 17 und Leuchtvorrichtung 5, welche an der Regelung des Aufladens des Akkumulators 18 und der Pufferbatterien 10 beteiligt sind, können dabei jeweils auch für eine Schnellladefunktion ausgebildet sein.

Die Erfindung ist nicht auf die dargestellten Ausführungsformen beschränkt, sondern umfasst alle Varianten und Modifikationen und deren Kombinationen, die in den Rahmen der angeschlossenen Ansprüche fallen.

## Patentansprüche

1. Anlage zur Beleuchtung einer Umgebung, umfassend:
eine Mehrzahl von Leuchtvorrichtungen (5), die in der Umgebung (2) verteilt und über ein Wegenetz (3) anfahrbar sind, wobei jede Leuchtvorrichtung (5) eine Leuchte (8), ein Wind- und/oder Solarmodul (9', 9") zur Erzeugung von die Leuchte (8) speisendem Wind- bzw. Solarstrom, eine Pufferbatterie (10) zur Zwischenspeicherung des Wind- bzw. Solarstroms und einen Ladeeingang (12) zum Laden der Pufferbatterie (10) aufweist,
**dadurch gekennzeichnet, dass** die Anlage (1) ferner umfasst:
eine gemeinsame Ladestation (13) für die Leuchtvorrichtungen (5), welche über das Wegenetz (3) anfahrbar ist und einen Ladeausgang (14) zur Abgabe von Ladestrom aufweist, und
einen auf dem Wegenetz (3) autark fahrenden Roboter (17), der einen Akkumulator (18) aufweist und zwischen einer ersten Stellung, in welcher er am Ladeausgang (14) der Ladestation (13) andockt und deren Ladestrom im Akkumulator (18) speichert, und mehreren zweiten Stellungen, in denen er jeweils am Ladeeingang (12) einer Leuchtvorrichtung (5) andockt und deren Pufferbatterie (10) aus dem Akkumulator (18) lädt, pendelt.

2. Anlage nach Anspruch 1, **dadurch gekennzeichnet, dass** jede Leuchtvorrichtung (5) eine mit einem Sender (21) ausgestattete Überwachungsschaltung (11) für den Ladestand der Pufferbatterie (10) aufweist und dafür ausgebildet ist, bei geringern Ladestand ein Anforderungssignal (22) über den Sender (21) auszustrahlen.

3. Anlage nach Anspruch 2, **dadurch gekennzeichnet, dass** der Roboter (17) einen Empfänger (23) aufweist und dafür ausgebildet ist, bei Empfang des Anforderungssignals (22) die sendende Leuchtvorrichtung (5) anzufahren und aufzuladen.

4. Anlage nach Anspruch 2, **dadurch gekennzeichnet, dass** die Ladestation (13) einen Empfänger (24) aufweist und dafür ausgebildet ist, bei Empfang des Anforderungssignals (22) den Roboter (17) zu der sendenden Leuchtvorrichtung (5) zu schicken, um diese aufzuladen.

5. Anlage nach einem der Ansprüche 2 bis 4, **dadurch gekennzeichnet, dass** das Anforderungssignal (22) die Position der Leuchtvorrichtung (5) enthält.

6. Anlage nach einem der Ansprüche 2 bis 4, **dadurch gekennzeichnet, dass** das Anforderungssignal (22) eine Kennung der Leuchtvorrichtung (5) enthält und die Anlage (1) einen Speicher (26) mit Kennungen und zugeordneten Positionen von Leuchtvorrichtungen (5) umfasst.

7. Anlage nach einem der Ansprüche 1 bis 6, **dadurch gekennzeichnet, dass** das Wegenetz (3) ein Landwegenetz und der Roboter (17) ein unbemanntes Landfahrzeug ist.

8. Anlage nach einem der Ansprüche 1 bis 6, **dadurch gekennzeichnet, dass** das Wegenetz (3) ein Wasserstraßennetz und der Roboter (17) ein unbemanntes Wasserfahrzeug ist.

9. Anlage nach Anspruch 7 oder 8, **dadurch gekennzeichnet, dass** jede Leuchtvorrichtung (5) einen Mast (6) aufweist, an dessen unterem Ende der Ladeeingang (12) und an dessen oberem Ende die Leuchte (8) liegt.

10. Anlage nach einem der Ansprüche 1 bis 6, **dadurch gekennzeichnet, dass** das Wegenetz (3) ein Luftwegenetz und der Roboter (17) ein unbemanntes Luftfahrzeug ist.

11. Anlage nach Anspruch 10, **dadurch gekennzeichnet, dass** jede Leuchtvorrichtung (5) einen Mast (6) aufweist, an dessen oberem Ende der Ladeeingang (12) liegt.

12. Anlagen nach Anspruch 9 oder 11, **dadurch gekennzeichnet, dass** der Mast (6) weitere stromgespeiste Einrichtungen (27) trägt, insbesondere eine optischen oder akustische Signaleinrichtung, einen Funk-Transceiver oder Funk-Router.

## Claims

1. Installation for illuminating an environment, comprising:
a multiplicity of illumination devices (5) which are distributed in the environment (2) and approachable via a route network (3), wherein each illumination device (5) has a light (8), a wind and/or solar module (9', 9") for respective generation of wind or solar electricity feeding the light (8), a buffer battery (10) for respectively buffering the wind or solar electricity, and a charging input (12) for charging the buffer battery (10),
**characterised in that** the installation (1) further comprises:
a common charging station (13) for the illumination devices (5), which is approachable via the route network (3) and has a charging output (14) for outputting charging electricity, and
a robot (17) which travels self-sufficiently on the route network (3), has an accumulator (18) and shuttles between a first position, in which it connects to the charging output (14) of the charging station (13) and buffers the charging electricity thereof in the accumulator (18), and multiple second positions, in each of which it connects to the charging input (12) of an illumination device (5) and charges the buffer battery (10) thereof from the accumulator (18).

2. Installation according to claim 1, **characterised in that** each illumination device (5) has a monitoring circuit (11) for the charging condition of the buffer battery (10), that is equipped with a transmitter (21), and is configured to broadcast, at a low charging condition, a request signal (22) via the transmitter (21).

3. Installation according to claim 2, **characterised in that** the robot (17) has a receiver (23) and is configured to approach and charge, upon receipt of the request signal (22), the broadcasting illumination device (5).

4. Installation according to claim 2, **characterised in that** the charging station (13) has a receiver (24) and is configured to send, upon receipt of the request signal (22), the robot (17) to the broadcasting illumination device (5) for charging the same.

5. Installation according to any one of claims 2 to 4, **characterised in that** the request signal (22) includes the position of the illumination device (5).

6. Installation according to any one of claims 2 to 4, **characterised in that** the request signal (22) includes an identifier of the illumination device (5) and the installation (1) comprises a memory (26) with identifiers and related positions of illumination devices (5).

7. Installation according to any one of claims 1 to 6, **characterised in that** the route network (3) is an overland route network and the robot (17) is an unmanned land craft.

8. Installation according to any one of claims 1 to 6, **characterised in that** the route network (3) is a water route network and the robot (17) is an unmanned watercraft.

9. Installation according to claim 7 or 8, **characterised in that** each illumination device (5) has a pole (6), at the lower end of which the charging input (12) is located and at the upper end of which the light (8) is located.

10. Installation according to any one of claims 1 to 6, **characterised in that** the route network (3) is an air route network and the robot (17) is an unmanned aircraft.

11. Installation according to claim 10, **characterised in that** each illumination device (5) has a pole (6), at the upper end of which the charging input (12) is located.

12. Installations according to claim 9 or 11, **characterised in that** the pole (6) carries further electricity fed equipments (27), particularly an optical or acoustical signalling equipment, a radio transceiver or a radio router.

## Revendications

1. Installation d'éclairage d'un environnement, comprenant :
une multiplicité de dispositifs d'éclairage (5) qui sont distribués dans l'environnement (2) et sont accessibles par le biais d'un réseau de chemins (3), où chaque dispositif d'éclairage (5) présente une lampe (8), un module éolien et/ou solaire (9', 9") pour la génération de courant éolien, respectivement solaire, alimentant la lampe (8), une batterie tampon (10) pour un stockage intermédiaire du courant éolien, respectivement solaire, et une entrée de charge (12) pour la charge de la batterie tampon (10),
**caractérisée en ce que** l'installation (1) comprend en outre :
un poste de charge (13) commun pour les dispositifs d'éclairage (5), lequel est accessible par le réseau de chemins (3) et présente une sortie de charge (14) pour la livraison de courant de charge, et
un robot (17) auto-suffisant se déplaçant sur le réseau de chemins (3) qui présente un accumulateur (18) et bascule entre une première position, dans laquelle il s'arrime à la sortie de charge (14) de la station de charge (13) et stocke son courant de charge dans l'accumulateur (18), et plusieurs deuxièmes positions, dans lesquelles il s'arrime respectivement à l'entrée de charge (12) d'un dispositif d'éclairage (5) et charge sa batterie tampon (10) à partir de l'accumulateur (18).

2. Installation selon la revendication 1, **caractérisée en ce que** chaque dispositif d'éclairage (5) présente un circuit de surveillance (11) équipé d'un émetteur (21) pour donner le niveau de charge de la batterie tampon (10) et est conçu pour émettre un signal de demande (22) dans le cas d'un niveau de charge faible par le biais de l'émetteur (21).

3. Installation selon la revendication 2, **caractérisée en ce que** le robot (17) présente un récepteur (23) et est conçu pour s'approcher et recharger, lors de la réception du signal de demande (22), le dispositif d'éclairage (5) émetteur.

4. Installation selon la revendication 2, **caractérisée en ce que** le poste de charge (13) présente un récepteur (24) et est conçu pour envoyer, lors de la réception du signal de demande (22), le robot (17) vers le dispositif d'éclairage (5) émetteur et recharger celui-ci.

5. Installation selon l'une des revendications 2 à 4, **caractérisée en ce que** le signal de demande (22) comporte la position du dispositif d'éclairage (5).

6. Installation selon l'une des revendications 2 à 4, **caractérisée en ce que** le signal de demande (22) comporte un identifiant du dispositif d'éclairage (5) et l'installation (1) comprend une mémoire (26) avec des identifiants et des positions correspondantes des dispositifs d'éclairage (5).

7. Installation selon l'une des revendications 1 à 6, **caractérisée en ce que** le réseau de chemins (3) est un réseau de chemins ruraux et le robot (17) est un véhicule terrestre sans équipage.

8. Installation selon l'une des revendications 1 à 6, **caractérisée en ce que** le réseau de chemins (3) est un réseau de cours d'eau et le robot (17) est une embarcation sans équipage.

9. Installation selon la revendication 7 ou la revendication 8, **caractérisée en ce que** chaque dispositif d'éclairage (5) présente un mât (6), à l'extrémité inférieure duquel se situe l'entrée de charge (12) et à l'extrémité supérieure duquel se situe la lampe (8).

10. Installation selon l'une des revendications 1 à 6, **caractérisée en ce que** le réseau de chemins (3) est un réseau de voies aériennes et le robot (17) est un aéronef sans équipage.

11. Installation selon la revendication 10, **caractérisée en ce que** chaque dispositif d'éclairage (5) présente un mât (6) à l'extrémité supérieure duquel se situe l'entrée de charge (12) .

12. Installations selon les revendications 9 ou 11, **caractérisées en ce que** le mât (6) porte d'autres équipements (27) alimentés en courant, notamment un équipement de signaux optiques ou acoustiques, un émetteur-récepteur radio ou un routeur radio.
